# EUROPÄISCHE PATENTSCHRIFT

(11) **EP 3 132 319 B1**
(45) Veröffentlichungstag und Bekanntmachung des Hinweises auf die Patenterteilung: **06.11.2019**
(21) Anmeldenummer: 15717855.9
(22) Anmeldetag: 15.04.2015
(51) Int. Cl.: G05B 19/414

(54) **VERFAHREN ZUM BETRIEB EINER AUTOMATISIERUNGSANORDNUNG**
METHOD FOR OPERATING AN AUTOMATION ARRANGEMENT
PROCÉDÉ D'EXPLOITATION D'UN SYSTÈME D'AUTOMATISATION

(30) Priorität: 15.04.2014 DE 102014105381
(43) Veröffentlichungstag der Anmeldung: 22.02.2017
(73) Patentinhaber: Broetje-Automation GmbH, 26215 Wiefelstede (DE)
(72) Erfinder: STOYKE, Markus, 26169 Friesoythe (DE)
(74) Vertreter: Gottschald, Jan
(86) Internationale Anmeldenummer: PCT/EP2015/058146
(87) Internationale Veröffentlichungsnummer: WO 2015/158763

(56) Entgegenhaltungen:
- WO-A2-2005/059664
- Anonymous: "KUKA.PLC", , 4. April 2005 (2005-04-04), Seiten 1-6, XP055196671, Gefunden im Internet: URL:http://www.gspnexus.com/brochure/28_en g.pdf [gefunden am 2015-06-18]
- PO-NAGEN W: "Real-time inter-processing for pc based robot controllers in tele-robotic and gantry robotic controller system", ROBOTICS AND BIOMIMETICS, 2008. ROBIO 2009. IEEE INTERNATIONAL CONFERENCE ON, IEEE, PISCATAWAY, NJ, USA, 22. Februar 2009 (2009-02-22), Seiten 1585-1589, XP031465827, ISBN: 978-1-4244-2678-2
- KUCHLIN W ET AL: "HighRobot: a high-performance universal robot control on parallel workstations", ENGINEERING OF COMPUTER-BASED SYSTEMS, 1997. PROCEEDINGS., INTERNATION AL CONFERENCE AND WORKSHOP ON MONTEREY, CA, USA 24-28 MARCH 1997, LOS ALAMITOS, CA, USA,IEEE COMPUTER. SOC, US, 24. März 1997 (1997-03-24), Seiten 444-451, XP010218896, DOI: 10.1109/ECBS.1997.581927 ISBN: 978-0-8186-7889-9
- Anonymous: "KMC - KUKA Motion Control - For everything that moves in automation: PC-based KUKA Motion Control", , 1. Februar 2004 (2004-02-01), Seiten 1-16, XP055196673, Gefunden im Internet: URL:http://www.unisgroup.com.br/pdf/Kuka-K RC2-Controller-Brochure.pdf [gefunden am 2015-06-18]
- "GOOGLE search KUKA.PLC", , 18. Juni 2015 (2015-06-18), XP055196669, Gefunden im Internet: URL:https://www.google.de/search?q=communi cate+implement+diagnose+kuka.plc&hl=de&sou rce=lnt&tbs=cdr%3A1%2Ccd_min%3A%2Ccd_max%3 A15.04.2014&tbm= [gefunden am 2015-06-18]

## Beschreibung

Die Erfindung betrifft ein Verfahren zum Betrieb einer Automatisierungsanordnung gemäß dem Oberbegriff von Anspruch 1.

Aus dem Stand der Technik sind speicherprogrammierbare Steuerungen (SPS) bekannt, mit denen in der Automatisierungstechnik Aktoren, insbesondere Endeffektoren und Bereitstellungsysteme, sowie Sensoren und sonstige Funktionseinheiten einer Maschine oder Anlage programmiert und automatisch angesteuert werden können. Ein solches Funktionselement, welche durch eine speicherprogrammierbare Steuerung prinzipiell ansteuerbar ist, wird sowohl einzeln als auch in einer Kombination hier und nachfolgend allgemein als Ein-Ausgabe-Modul bezeichnet. Herkömmlicherweise wurden diese speicherprogrammierbaren Steuerungen durch speziell hierfür vorgesehene Geräte und elektronische Anordnungen bereitgestellt. Regelmäßig kommunizieren derartige speicherprogrammierbare Steuerungen über einen Bus, wie z. B. einem Feldbus, mit dem Ein-Ausgabemodul, zu dessen Ansteuerung sie eingerichtet sind.

Mittlerweile sind auch speicherprogrammierbare Steuerungen bekannt, deren Funktionalität durch ein auf einem Computer ausgeführtes Computerprogramm bereitgestellt wird. Ein solches Computerprogramm kann als SPS-Computerprogramm bezeichnet werden, wobei das mit einem solchen SPS-Computerprogramm betriebene System insgesamt wiederum als Soft-SPS bezeichnet werden kann. Es ist also keine spezielle Hardware mehr für die speicherprogrammierbare Steuerung vorgesehen, sondern ihre Funktionalität wird durch ein Computerprogramm gebildet, welches auf einem herkömmlichen Computer oder auf einem auf die Automatisierungsumgebung zugeschnittenen Industrie-PC oder Embedded-PC abläuft. Zur Ansteuerung der Ein-Ausgabe-Module kann entsprechend ein solcher Computer ebenfalls an einen Feldbus angeschlossen sein.

Aus dem Stand der Technik und speziell aus der EP 1 586 967 A2, sind auch Erweiterungen durch Software eines solchen SPS-Computerprogramms bekannt. Eine solche bekannte Erweiterung kann z. B. dazu dienen, die Kommunikation mit einem speziellen Gerät durch einen Treiber o. dgl. zu ermöglichen. Bei den in diesem Stand der Technik vorgestellten Erweiterungen handelt es sich allerdings um Erweiterungsmodule wie z. B. dynamische Programmbibliotheken oder DLLs (Dynamic-link libraries), die von dem SPS-Computerprogramm angesprochen oder eingebunden werden können. Sie stehen dabei also letzten Endes unter der softwaretechnischen Kontrolle des SPS-Computerprogramms. Eine Kontrolle der speicherprogrammierbaren Steuerung im softwaretechnischen Sinne durch diese Erweiterung ist nicht vorgesehen.

Die WO 2005/059664 A2 betrifft ein Verfahren zur Ansteuerung einer Automatisierungsanordnung, bei dem ein Motionmanager eine NC-Steuerung und eine SPS-Steuerung miteinander synchronisiert, wobei alle drei Komponenten als separate Computerprogramme auf einer Rechnervorrichtung laufen.

Bei Automatisierungszellen als Bestandteil eines Automatisierungssystems kommt es regelmäßig vor, dass ein von einer speicherprogrammierbaren Steuerung angesteuertes Ein-Ausgabe-Modul an einem Manipulator, bei dem es sich z. B. um einen Mehrachsroboter handelt, angeordnet ist. Speziell kann das Ein-Ausgabe-Modul an dem Tool-Center-Point (TCP) des Manipulators angeordnet sein.

Ein solcher Manipulator wird regelmäßig durch eine numerische Steuerung, hier und nachfolgend als NC-Steuerung bezeichnet, in seinen Bewegungen angesteuert. Auch diese NC-Steuerung kann prinzipiell durch ein auf einem Computer ausgeführtes Computerprogramm bereitgestellt werden. Durch das Vorsehen des Ein-Ausgabe-Moduls an dem Manipulator stehen die von dem Ein-Ausgabe-Modul ausgeführten Tätigkeiten - welche z. B. von dem SPS-Computerprogramm vorgegeben werden - sowie die Bewegungen des Manipulators - die wiederum von der NC-Steuerung kontrolliert werden - in einem engen Zusammenhang.

Vor diesem Hintergrund besteht die Aufgabe der Erfindung darin, ein Verfahren zum Betrieb einer Automatisierungsanordnung und insbesondere einer solchen Automatisierungsanordnung, bei der die Funktionalität einer speicherprogrammierbaren Steuerung durch ein Computerprogramm bereitgestellt wird, dahin gehend zu verbessern, dass eine bessere Integration zwischen dem Computerprogramm für die speicherprogrammierbare Steuerung und einer NC-Steuerung für die Ansteuerung eines Manipulators ermöglicht wird.

Das genannte Problem wird bei einem Verfahren zum Betrieb einer Automatisierungsanordnung mit den Merkmalen des Oberbegriffs von Anspruch 1 durch die Merkmale des kennzeichnenden Teils von Anspruch 1 gelöst.

Wesentlich für die Erfindung ist die Erkenntnis, dass neben einem SPS-Computerprogramm zur Bereitstellung einer speicherprogrammierbaren Steuerung und dieser softwaretechnisch übergeordnet auf einer Rechnervorrichtung ein Zellkontroll-Computerprogramm vorgesehen ist, welches einerseits zur Ansteuerung des Ein-Ausgabe-Moduls die Schnittstelle des SPS-Computerprogramms ansteuert und andererseits die Funktion einer NC-Steuerung bereitstellt, wobei dann durch dieses Zellkontroll-Computerprogramm selbst die Ansteuerung des Manipulators und anderer Komponenten durchgeführt wird.

Mit anderen Worten bildet dieses Zellkontroll-Computerprogramm das im softwaretechnischen Sinne übergeordnete "Dach", welches alle notwendigen Funktionen für die Automatisierungsanordnung einschließlich der SPS-Funktionalität unter seiner Kontrolle hat und auf diese Weise diese untereinander koordinieren kann. Dabei kann modulartig auf die Funktionalität des SPS-Computerprogramms zugegriffen werden, wobei dieses SPS-Computerprogramm als bereits vorhandene Komponente in das Gesamtsystem eingebracht werden kann. Durch diese Vereinheitlichung unter dem Dach des Zellkontroll-Computerprogramms kann auch eine einheitliche Schnittstelle des Systems insgesamt nach außen bereitgestellt werden, welche wiederum die Ansteuerung der Automatisierungsanordnung auf einheitliche Art und Weise ermöglicht.

Die bevorzugte Ausgestaltung nach dem Unteranspruch 3 betrifft vorteilhafte Bussysteme zur Anbindung der Ein-Ausgabe-Module sowie der Manipulatoren an die Rechnervorrichtung.

Die bevorzugten Ausgestaltungen der Unteransprüche 6 bis 8 wiederum beschreiben sinnvolle Aufteilungen des SPS-Computerprogramms bzw. des Zellkontroll-Computerprogramms innerhalb eines Betriebssystems und einer Prozessstruktur der Rechnervorrichtung.

Der Unteranspruch 9 beschreibt vorteilhafte Möglichkeiten der Interprozesskommunikation auf der Rechnervorrichtung zwischen dem Zellkontroll-Computerprogramm und dem SPS-Computerprogramm, welche insbesondere den Synchronizitätsanforderungen an diese beiden Programme gerecht werden.

Die Unteransprüche 10 bis 12 beschreiben die Ausgestaltung eines NC-Verarbeiters als Bestandteil des Zellkontroll-Computerprogramms und sein spezielles Zusammenspiel mit dem SPS-Computerprogramm einerseits und der Ansteuerung des Manipulators andererseits.

Wie die Unteransprüche 13 bis 15 beschreiben, wird bei dieser Ansteuerung des Manipulators und anderen Zugriffen mit großem Vorteil eine objektorientierte Softwarearchitektur eingesetzt.

Weitere Einzelheiten, Merkmale, Ziele und Vorteile der vorliegenden Erfindung werden nachfolgend anhand der Zeichnung eines bevorzugten Ausführungsbeispiels erläutert. In der Zeichnung zeigt
- Fig. 1: eine schematische Darstellung einer Automatisierungsanordnung zur Ausführung des vorschlagsgemäßen Verfahrens,
- Fig. 2: eine schematische Darstellung der Softwarestruktur auf der Rechnervorrichtung der Automatisierungsanordnung der Fig. 1,
- Fig. 3: eine schematische Darstellung des Datenflusses eines Zellkontroll-Computerprogramms gemäß der Automatisierungsanordnung der Fig. 1,
- Fig. 4: eine schematische Darstellung der Architektur des Zellkontroll-Computerprogramms der Fig. 3.

Das vorschlagsgemäße Verfahren dient dem Betrieb einer Automatisierungsanordnung 1 mit einem Manipulator 2a, b und einem Ein-Ausgabe-Modul 3a, b, wobei der Manipulator 2a, b und das Ein-Ausgabe-Modul 3a, b jeweils zur automatisierten Fertigung eingerichtet ist.

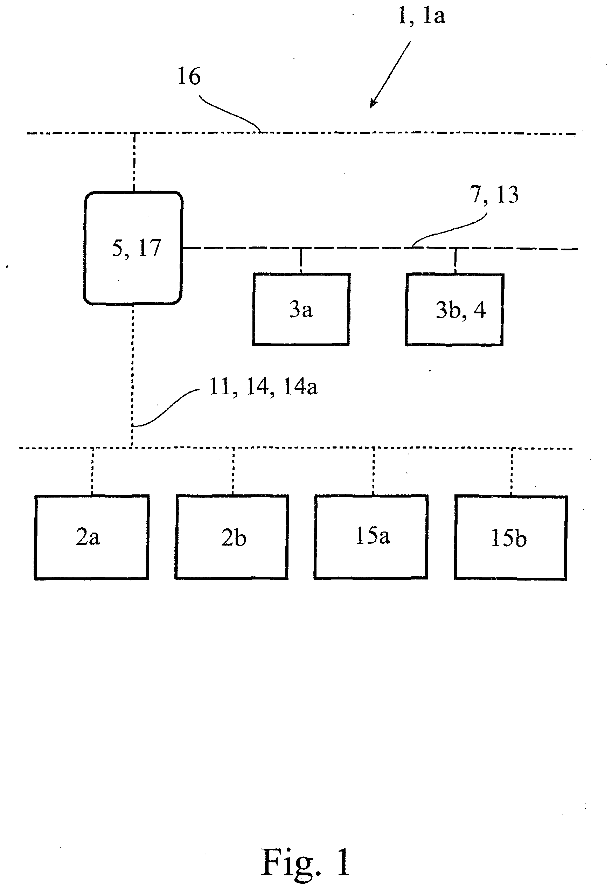

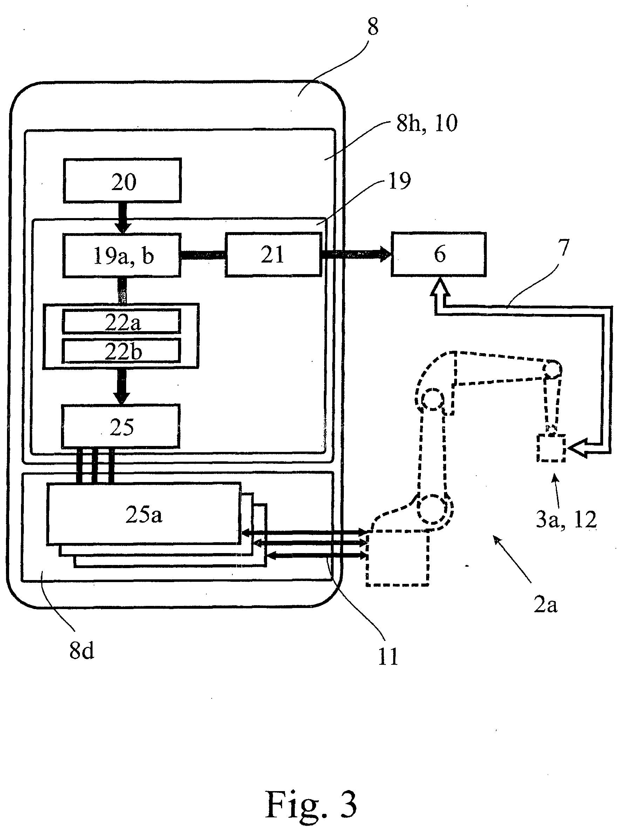

Eine solche Automatisierungsanordnung 1 ist in der Fig. 1 dargestellt, wobei hier zwei Manipulatoren 2a, b und zwei Ein-Ausgabe-Module 3a, b vorgesehen sind, von denen das Ein-Ausgabe-Modul 3b ein Sicherheitsmodul 4 ist. Dieses Sicherheitsmodul 4 kann etwa eine Notaus-Funktionalität bereitstellen. In der Fig. 3 ist lediglich jeweils ein Manipulator 2a und ein Ein-Ausgabe-Modul 3a dargestellt.

Die Automatisierungsanordnung 1, welche nach dem vorschlagsgemäßen Verfahren betrieben werden soll, weist ferner eine Rechnervorrichtung 5 auf. Bei der Automatisierungsanordnung 1 kann es sich insbesondere um eine Automatisierungszelle 1a handeln, also um eine modulare Anordnung zur Automatisierung innerhalb eines größeren Automatisierungssystems z. B. einer größeren Fabrik.

Vorschlagsgemäß wird auf der Rechnervorrichtung 5 ein SPS-Computerprogramm 6 zur Bereitstellung einer speicherprogrammierbaren Steuerung für das Ein-Ausgabe-Modul 3a, b ausgeführt, wobei das SPS-Computerprogramm 6 über einen Modulbus 7 zur Ansteuerung des Ein-Ausgabe-Moduls 3a, b mit diesem in nachrichtentechnischer Verbindung steht.

Das vorschlagsgemäße Verfahren ist nun dadurch gekennzeichnet, dass auf der Rechnervorrichtung 5 ein Zellkontroll-Computerprogramm 8 zur Ansteuerung des SPS-Computerprogramms 6 über eine SPS-Schnittstelle 9 des SPS-Computerprogramms 6 ausgeführt wird, dass das Zellkontrollcomputerprogramm 9 eine NC-Steuerung 10 für den Manipulator 2a, b bereitstellt und dass das Zellkontroll-Computerprogramm 8 über einen Netzwerkbus 11 zur Ansteuerung des Manipulators 2a, b mit diesem in nachrichtentechnischer Verbindung steht.

Bei dem Manipulator 2a, b kann es sich, wie vorliegend, um einen Mehrachsmanipulator, und insbesondere einen sechsachsigen Manipulator handeln. Die Rechnervorrichtung 5 kann auch aus mehreren einzelnen Rechnereinheiten bestehen. Ebenso kann sowohl das SPS-Computerprogramm 6, als auch das Zellkontrollcomputerprogramm 8 aus einer Reihe von einzelnen Computerprogrammen aufgebaut sein, die jeweils auch in einem eigenen Prozess ausgeführt werden können. Einzelheiten hierzu werden unten stehend beschrieben.

In einer bevorzugten Ausführung weist das Ein-Ausgabe-Modul 3a, b eine an dem Manipulator 2a, b angeordnete Applikationsvorrichtung 12 auf. Es kann das Ein-Ausgabe-Modul 3a, b auch aus einer solchen Applikationsvorrichtung 12 bestehen. Diese Applikationsvorrichtung 12 kann insbesondere an dem Tool-Center-Point des Manipulators 2a, b angeordnet sein und es kann sich vorzugsweise dabei um ein Werkzeug, eine Messvorrichtung oder eine Aufnahme handeln. Die Applikationsvorrichtung 12 kann dann insbesondere durch das SPS-Computerprogramm 6 durch die Ansteuerung des Ein-Ausgabe-Moduls 3a, b selbst angesteuert werden.

Weiter ist bevorzugt, dass der Modulbus 7 ein Feldbus 13 ist. Alternativ oder zusätzlich kann es sich bei dem Netzwerkbus 11 um einen Ethernetbus 14 handeln, wobei hierbei insbesondere ein Echtzeit-Ethernetbus 14a infrage kommt. Bei einem Echtzeit-Ethernetbus 14a handelt es sich um ein Ethernetbus nach einem Protokoll, welches eine Echtzeitfähigkeit bereitstellt.

Ebenso ist es bevorzugt, dass das Zellkontrollcomputerprogramm 8 über den Netzwerkbus 11 mit einer Sensorvorrichtung 15a, b in nachrichtentechnischer Verbindung zum Auslesen der Sensorvorrichtung 15a, b steht. Im Ausführungsbeispiel der Fig. 1 handelt es sich bei der Sensorvorrichtung 15a um einen Zeilenscanner und bei der Sensorvorrichtung 15b um eine Kamera oder ein Kamerasystem, wobei dann jede einzelne Kamera des Kamerasystems unterschiedlich ausgestaltet sein kann.

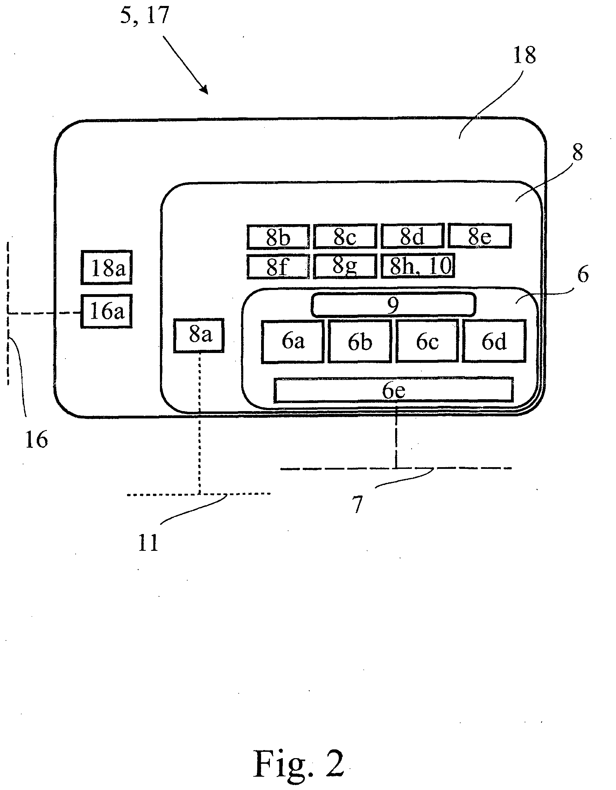

Die Automatisierungsanordnung 1 und speziell die Automatisierungszelle 1a kann - wie bereits festgestellt - mit anderen Automatisierungsanordnungen zusammen Bestandteil eines größeren Automatisierungssystems sein, welches z. B. zentral gesteuert wird. In so einem Fall ist bevorzugt vorgesehen, dass das Zellkontroll-Computerprogramm 8 eine Zellkontrollschnittstelle über einen Fabrikbus 16 bereitstellt, mit welchem Fabrikbus 16 das Zellkontroll-Computerprogramm 8 in nachrichtentechnischer Verbindung steht. Ein entsprechender Fabrikbustreiber 16a ist in der Fig. 2 dargestellt. Auf diese Weise kann ein Zentralrechner, welcher mehrere Automatisierungszellen steuert, auch auf die Automatisierungszelle 1a und speziell auf das Zellkontroll-Computerprogramm 8 auf der Rechnervorrichtung 5 zugreifen.

Prinzipiell kann es sich bei der Rechnervorrichtung 5 um eine beliebige computerartige Vorrichtung handeln, so beispielsweise speziell um einen Industriecomputer oder ein sonstiges Mikroprozessorsystem. Bevorzugt ist allerdings, dass die Rechnervorrichtung 5 ein Personalcomputer 17 ist. Dies bietet die Möglichkeit, neben dem Zellkontrollcomputerprogramm 8 noch andere Computerprogramme flexibel auf der Rechnervorrichtung 5 auszuführen. Hier ist weiter bevorzugt, dass das SPS-Computerprogramm 6 und das Zellkontrollcomputerprogramm 8 auf einem Multimediabetriebssystem 18 für einen Personalcomputer 17 ablaufen.

Schematisch ist dieser Zusammenhang in der Fig. 2 dargestellt. Hier ist zunächst das SPS-Computerprogramm 6 zu erkennen, welches verschiedene Funktionsblöcke implementiert, hier die Endeffektorfunktion 6a, ein Zuführsystem 6b eines Werkzeugs, eine Werkstückdatenbank 6c sowie Sicherheitsfunktionen 6d. Jede derartige Funktion kann durch ein eigenes Modul im softwaretechnischen Sinne implementiert sein. Für die nachrichtentechnische Verbindung mit dem Modulbus 7 ist ein Modulbustreiber 6e vorgesehen. Die Schnittstelle nach außen - im softwaretechnischen Sinne - bildet die oben bereits beschriebene SPS-Schnittstelle 9.

Das Zellkontroll-Computerprogramm 8 spricht das SPS-Computerprogramm 6 über diese SPS-Schnittstelle 9 an. Das Zellkontrollcomputerprogramm 8 weist daneben einen Netzwerkbustreiber 8a für die nachrichtentechnische Verbindung mit dem Netzwerkbus 11 auf. Andere insbesondere softwaretechnische Module des Zellkontrollcomputerprogramms 8 sind ein Visualisierungsmodul 8b, ein Diagnosemodul 8c, ein Robotermodul 8d, ein Normalitätssensormodul 8e, ein Positionssensormodul 8f, ein Lasersensormodul 8g sowie ein NC-Modul 8h. Diese Module kommunizieren untereinander. Ferner können noch weitere Module vorgesehen sein.

Außerhalb des Zellkontroll-Computerprogramms 8 und auf dem Betriebssystem, bei welchem es sich hier um das Multimediabetriebssystem 18 handelt, läuft nun wiederum - neben dem obigen Fabrikbustreiber 16a für die nachrichtentechnische Verbindung zum Fabrikbus 16 - ein Konfigurationsmodul 18a, welches z. B. den Zugriff zur Konfiguration auf das Zellkontroll-Computerprogramm 8 über eine herkömmliche Bedienoberfläche des Multimediabetriebssystems 18 erlaubt.

Es ist weiter bevorzugt, dass das SPS-Computerprogramm 6 und das Zellkontroll-Computerprogramm 8 durch jeweils unterschiedliche Prozesse ausgeführt werden. Der Begriff Prozess ist hier im softwaretechnischen Sinne zu verstehen. Dabei kann sowohl das SPS-Computerprogramm 6 als auch das Zellkontroll-Computerprogramm 8 durch jeweils einen einzelnen Prozess ausgeführt werden. Es kann aber auch sein, dass das SPS-Computerprogramm 6 und das Zellkontrollcomputerprogramm 8 durch jeweils eine Vielzahl von unterschiedlichen Prozessen ausgeführt werden. Die Aufteilung des SPS-Computerprogramms 6 bzw. des Zellkontrollcomputerprogramms 8 auf die einzelnen Prozesse kann dabei der Aufteilung in die Module gemäß der Darstellung der Fig. 2 oder einer ähnlichen Aufteilung entsprechen, es können aber auch mehrere Module zusammengefasst werden und in einem einzelnen Prozess ausgeführt werden. Dabei kann es auch sein, dass einige Module zumindest teilweise durch das Betriebssystem bereitgestellt werden, so beispielsweise die Treiber.

Eine bevorzugte Aufteilung des Zellkontroll-Computerprogramms 8 in unterschiedliche Prozesse sieht vor, dass ein NC-Untercomputerprogramm des Zellkontroll-Computerprogramms 8 zum Bereitstellen der NC-Steuerung 10 in einem NC-Prozess ausgeführt wird und dass ein Manipulator-Unterprogramm des Zellkontroll-Computerprogramms 8 zur Ansteuerung des Manipulators 2a, b in einem Manipulator-Prozess ausgeführt wird. Dabei ist der Manipulator-Prozess also verschieden von dem NC-Prozess. Die NC-Steuerung 10 - und damit das NC-Untercomputerprogramm - verarbeitet NC-Befehle, welche einerseits eine Ansteuerung des Ein-Ausgabe-Moduls 3a, b und andererseits eine Ansteuerung des Manipulators 2a, b betreffen. Die aus den NC-Befehlen gewonnen Informationen zur Ansteuerung des Manipulators 2a, b, also "bereinigt" von den Informationen zur Ansteuerung des Ein-Ausgabe-Moduls 3a, b, können dann von dem Manipulator-Unterprogramm abgearbeitet werden. Bei diesem NC-Unterprogramm zum Bereitstellen der NC-Steuerung 10 kann es sich - gemäß der Darstellung in der Fig. 3 - um das NC-Modul 8h der Fig. 2 und bei dem Manipulator-Unterprogramm des Zellkontroll-Computerprogramms um das Robotermodul 8d der Fig. 2 handeln.

Die SPS-Schnittstelle 9 des SPS-Computerprogramms 6 kann prinzipiell von beliebigen Programmen und dementsprechend aus verschiedenen Prozessen angesprochen werden. Einerseits wird sie zur Ansteuerung des Ein-Ausgabe-Moduls 3a, b durch das Zellkontrollcomputerprogramm 8 angesprochen, andererseits werden über die SPS-Schnittstelle 9 auch Daten zum Abrufen bereitgestellt, welche dann etwa durch das Visualisierungsmodul 8b des Zellkontroll-Computerprogramms 8 auf einem Bildschirm der Rechnervorrichtung 5 dargestellt werden können.

Es kann auch sein, dass Systemprozesse eines Betriebssystems der Rechnervorrichtung 5 und insbesondere des Multimediabetriebssystems 18 auf die SPS-Schnittstelle 9 des SPS-Computerprogramms 6 zugreifen müssen. Dabei ist regelmäßig zum Herstellen der Synchronizität zwischen den Aktionen des Ein-Ausgabe-Moduls 3a, b mit den Bewegungen des Manipulators 2a, b der Zugriff zur Ansteuerung der Ein-Ausgabe-Module 3a, b wichtiger und insbesondere zeitkritischer als beispielsweise die Visualisierung auf einem Bildschirm.

Daher ist es bevorzugt, dass die Rechnervorrichtung 5 mehrere Interprozesskanäle zur Kommunikation mit dem SPS-Computerprogramm 6 bereitstellt, und zwar mit zumindest teilweise unterschiedlicher Priorisierung. Hier bedeutet Priorisierung die Reihenfolge, mit der eine entsprechende Kommunikation über einen solchen Interprozesskanal von dem Betriebssystem abgearbeitet wird, wobei auf eine Kommunikation über einen Interprozesskanal mit einer höheren Priorität rascher reagiert wird, als auf eine Kommunikation über einen Interprozesskanal mit einer niedrigeren Priorität. Speziell kann ein Vorgang mit einer höheren Priorität einen aktuell verarbeiteten Vorgang mit einer niedrigeren Priorität unterbrechen. Dies kann einerseits dadurch geschehen, dass ein einzelner Prozess die Kommunikation über die Interprozesskanäle bereitstellt und diese in Abhängigkeit der jeweiligen Priorität der Interprozesskanäle bearbeitet. Alternativ oder zusätzlich kann jeder Interprozesskanal einem Prozess mit einer Priorität entsprechend der Priorität des Interprozesskanals zugewiesen sein, wobei dann der jeweilige Prozess gemäß seiner Priorität bearbeitet wird.

Weiter ist es bevorzugt, dass das NC-Untercomputerprogramm und ein in einem Visualisierungsprozess ausgeführtes Visualisierungsprogramm jeweils über einen Interprozesskanal mit dem SPS-Computerprogramm 6 kommunizieren und der Interprozesskanal des NC-Untercomputerprogramms höher priorisiert ist, als derjenige des Visualisierungsprogramms. Dies trägt den beschriebenen Umstand Rechnung, dass die Ansteuerung durch das NC-Untercomputerprogramm wichtiger ist und rascher ausgeführt werden soll als eine Visualisierung.

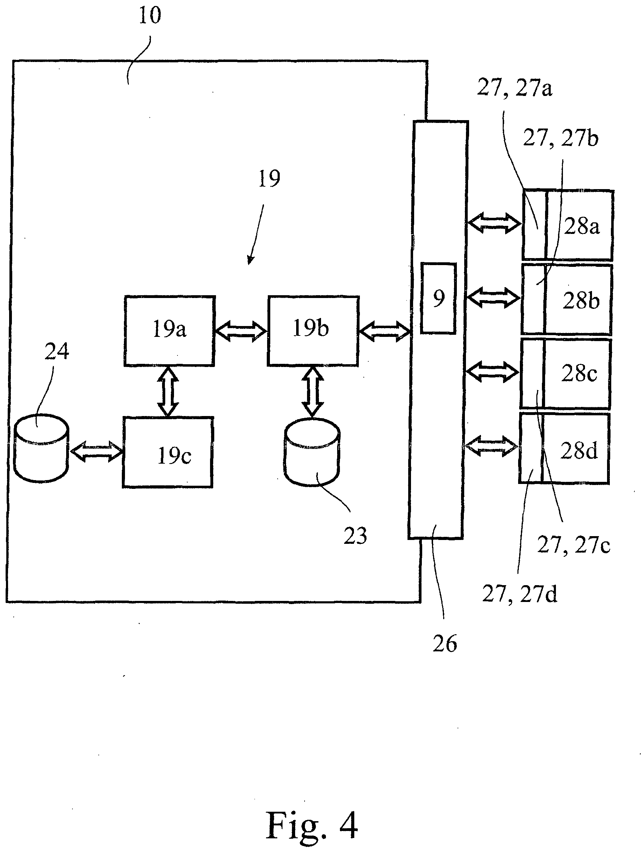

Bezug nehmend auf die Darstellung der Fig. 3 und der Fig. 4 ist bevorzugt vorgesehen, dass das Zellkontroll-Computerprogrämm 6 einen NC-Verarbeiter 19 zum Übersetzen eines NC-Programms 20 in Schaltbefehle 21 zur Ansteuerung des Ein-Ausgabe-Moduls 3a, b aufweist. Alternativ oder zusätzlich kann der NC-Verarbeiter 19 auch zum Übersetzen des NC-Programms 20 in Geometriedaten 22a und/oder in Technologiedaten 22b zur Ansteuerung des Manipulators 2a, b eingerichtet sein. Die jeweilige Darstellung der Fig. 3 und der Fig. 4 ist insoweit komplementär, als dass in der Fig. 3 in erster Linie der Verarbeitungsfluss der Daten dargestellt wird und in der Fig. 4 der softwaretechnische Aufbau der Schnittstellen beschrieben ist.

Der NC-Verarbeiter 19 kann einerseits aus mehreren Modulen bestehen, die jeweils in einem eigenen Prozess ausgeführt werden. Alternativ kann der NC-Verarbeiter 19 insgesamt in einem Prozess ausgeführt werden, wobei es sich dabei insbesondere um den obigen NC-Prozess handeln kann. Somit kann der NC-Verarbeiter 19 insbesondere von dem obigen NC-Untercomputerprogramm entsprechen oder von diesem umfasst sein. Folglich kann der NC-Verarbeiter auch durch das obige NC-Modul 8h gebildet sein.

Bei dem obigen NC-Programm 20 handelt es sich nun um eine Abfolge von NC-Befehlen, welche in einem Klartext abgefasst sind. Dies wird auch als G-Code bezeichnet. Der G-Code kann G-Befehle aber auch M-Befehle und allgemeine Parameter umfassen. Der NC-Verarbeiter 19 umfasst einen NC-Interpreter 19a und einen NC-Befehlsumsetzer 19b, welcher Zugriff auf eine Befehlsdatenbank 23 hat. NC-Interpreter 19a und NC-Befehlsumsetzer 19b übersetzen den Klartext des NC-Programms 20 in Geometriedaten 22a und/oder Technologiedaten 22b einerseits, jeweils zur Ansteuerung des Manipulators 2a, b, und Schaltbefehle 21 zur Ansteuerung des Ein-Ausgabe-Moduls 3a, b andererseits. Dabei kann die Erzeugung der Schaltbefehle 21 auch auf den Technologiedaten 22b beruhen.

Das NC-Programm 20 kann auch Verweise auf oder Abhängigkeiten von Sensordaten umfassen, sodass bevorzugt vorgesehen ist, dass der NC-Verarbeiter 19 auch dazu eingerichtet ist, das NC-Programm 20 in Sensorabfragen zum Auslesen der Sensorvorrichtung 15a, b zu übersetzen.

Im vorliegenden Beispiel umfasst der NC-Verarbeiter 19 noch einen NC-Datensammler 19c, welcher bei der Abarbeitung des NC-Programms automatisch erzeugte Datensätze in einer Protokolldatenbank 24 hinterlegt.

Weiter ist vorgesehen, dass der NC-Verarbeiter 19 eine Berechnungsroutine 25 zur Bahnplanung des Manipulators 2a, b basierend auf den Geometriedaten 22a und/oder basierend auf den Technologiedaten 22b ausführt. Bevorzugt umfasst die von der Berechnungsroutine 25 ausgeführte Bahnplanung eine Kinematiktransformation, also eine Umwandlung von kartesischen Koordinaten in Achskoordinaten oder umgekehrt. Alternativ oder zusätzlich kann die von der Berechnungsroutine 25 ausgeführte Bahnplanung auch eine Interpolation umfassen. Basierend auf den Ergebnissen der Berechnungsroutine 25 können dann ein oder mehrere Lageregler 25a des Manipulators 2a mit Führungsgrößen versorgt werden. Diese Variante entspricht der Darstellung der Fig. 3. Abweichend von dieser Darstellung kann die Berechnungsroutine 25 auch durch das Robotermodul 8d bereitgestellt werden.

Gemäß einer weiteren Variante führt diese Berechnungsroutine 25 die obige Kinematiktransformation durch, nicht aber die Bahnplanung. Hier wird, basierend auf der Kinematiktransformation, eine - nicht dargestellte - Robotersteuerung des Manipulators 2a, b mit den Ergebnissen der Kinematiktransformation versorgt. Sowohl die Bahnplanung als auch die Funktionalität der obigen Lageregler 25a wird dann entsprechend durch diese Robotersteuerung bereitgestellt.

Bezüglich des Ein-Ausgabe-Moduls 3a, b ist speziell vorgesehen, dass der NC-Verarbeiter 19 die Schaltbefehle 21 ausführt, in dem das Zellkontrollcomputerprogramm 8 - deren Bestandteil der NC-Verarbeiter 19 ja ist - auf die SPS-Schnittstelle 9 des SPS-Computerprogramms 6 zugreift und das SPS-Computerprogramm 6 auf den Zugriff das Ein-Ausgabe-Modul 3a, b über den Modulbus 7 ansteuert.

Für diesen Zugriff und andere Zugriffe kann dabei eine spezielle Art der Kapselung vorgesehen sein, wie hier nachfolgend wiederum in Bezug auf die Fig. 4 dargestellt wird. Speziell ist bevorzugt vorgesehen, dass der NC-Verarbeiter 19 zur Ansteuerung des Manipulators 2a, b vorzugsweise auch zum Auslesen der Sensorvorrichtung 15a, b insbesondere auch zum Ausführen der Berechnungsroutine 25 auf eine Kapselungsschnittstelle 26 des Zellkontroll-Computerprogramms 8 zugreift, und dass auf den Zugriff der Manipulator 2a, b über den Netzwerkbus 11 angesteuert wird. Bevorzugt ist weiter, dass ggf. darauf auch die Sensorvorrichtung 15a, b über den Netzwerkbus 11 ausgelesen wird und weitere insbesondere auch eine Bahnplanung auf den Zugriff durchgeführt wird.

Sowohl dieser Zugriff auf die Kapselungs-Schnittstelle 26 als auch der Zugriff auf die SPS-Schnittstelle 9 kann mittels einer objektorientierten Schnittstellen-klasse erfolgen. Daher ist es bevorzugt, dass der Zugriff auf die Kapselungs-Schnittstelle 26 und/oder auf die SPS-Schnittstelle 9 den Zugriff auf eine objektorientierte Schnittstellenklasse 27 von der Art einer Manipulatorklasse 27a, einer Ein-Ausgabe-Modulklasse 27b, einer Bahnplanungsklasse 27c und/oder einer Sensorklasse 27d umfasst. Damit wird also eine - jeweils für die Ansteuerung eines Manipulators, eines Ein-Ausgabe-Moduls, einer Bahnplanungsroutine oder eines Sensors - stets gleiche Schnittstelle für diese Zugriffe bereitgestellt und es werden etwaige Unterschiede in der Implementierung gekapselt. Es kann speziell der Zugriff auf die SPS-Schnittstelle 9 den Zugriff auf die Ein-Ausgabe-Modulklasse 27b umfassen.

Diese werden nun dadurch berücksichtigt, dass wie bevorzugt die Manipulatorklasse 27a, die Ein-Ausgabe-Modulklasse 27b und/oder die Sensorklasse 27d jeweils durch ein Manipulatorobjekt 28a, ein Ein-Ausgabe-Modulobjekt 28b bzw. ein Sensorobjekt 28d implementiert wird, welches abhängig vom Typ des Manipulators 2a, b des Ein-/Ausgabemoduls 3a, b bzw. der Sensorvorrichtung 15a, b ist. Ebenso kann die Bahnplanungsklasse 27d durch ein Bahnplanungsobjekt 28d implementiert sein, welches abhängig von den speziellen Algorithmen ist, mit denen die Bahnplanung und speziell die Interpolation und die Kinematiktransformation implementiert ist.

## Patentansprüche

1. Verfahren zum Betrieb einer Automatisierungsanordnung (1), vorzugsweise zum Betrieb einer Automatisierungszelle (1a), mit einem Manipulator (2a, b) und einem Ein-Ausgabe-Modul (3a, b) zur automatisierten Fertigung sowie einer Rechnervorrichtung (5), wobei auf der Rechnervorrichtung (5) ein SPS-Computerprogramm (6) zur Bereitstellung einer speicherprogrammierbaren Steuerung für das Ein-Ausgabe-Modul (3a, b) ausgeführt wird, welches SPS-Computerprogramm (6) über einen Modulbus (7) zur Ansteuerung des Ein-Ausgabe-Moduls (3a, b) mit diesem in nachrichtentechnischer Verbindung steht, wobei auf der Rechnervorrichtung (5) ein Zellkontroll-Computerprogramm (8) zur Ansteuerung des SPS-Computerprogramms (6) über eine SPS-Schnittstelle (9) des SPS-Computerprogramms (6) ausgeführt wird, wobei das Zellkontroll-Computerprogramm (8) eine NC-Steuerung (10) für den Manipulator (2a, b) bereitstellt, wobei das Zellkontroll-Computerprogramm (8) über einen Netzwerkbus (11) zur Ansteuerung des Manipulators (2a, b) mit diesem in nachrichtentechnischer Verbindung steht **dadurch gekennzeichnet, dass** das Zellkontroll-Computerprogramm (8) einen NC-Verarbeiter (19) zum Übersetzen eines NC-Programms (20) in Schaltbefehle (21) zur Ansteuerung des Ein-Ausgabe-Moduls (3a, b) und zum Übersetzen eines NC-Programms (20) in Geometriedaten (22a) und/oder Technologiedaten (22b) zur Ansteuerung des Manipulators (2a, b) aufweist.

2. Verfahren nach Anspruch 1, **dadurch gekennzeichnet, dass** das Ein-Ausgabe-Modul (3a, b) eine an dem Manipulator (2a, b) angeordnete Applikationsvorrichtung (12), vorzugsweise ein Werkzeug, eine Messvorrichtung oder eine Aufnahme, aufweist.

3. Verfahren nach Anspruch 1 oder 2, **dadurch gekennzeichnet, dass** der Modulbus ein Feldbus (13) ist und/oder dass der Netzwerkbus (11) ein Ethernetbus (14) ist, insbesondere ein Echtzeit-Ethernetbus (14a) ist.

4. Verfahren nach einem der Ansprüche 1 bis 3, **dadurch gekennzeichnet, dass** das Zellkontroll-Computerprogramm (8) über den Netzwerkbus (11) mit einer Sensorvorrichtung (15a, b) in nachrichtentechnischer Verbindung zum Auslesen der Sensorvorrichtung (15a, b) steht.

5. Verfahren nach einem der Ansprüche 1 bis 4, **dadurch gekennzeichnet, dass** das Zellkontroll-Computerprogramm (8) eine Zellkontrollschnittstelle über einen Fabrikbus (16) bereitstellt, mit welchem Fabrikbus (16) das Zellkontroll-Computerprogramm (8) in nachrichtentechnischer Verbindung steht.

6. Verfahren nach einem der Ansprüche 1 bis 5, **dadurch gekennzeichnet, dass** die Rechnervorrichtung (5) ein Personalcomputer (17) ist, vorzugsweise, dass das SPS-Computerprogramm (6) und das Zellkontroll-Computerprogramm (8) auf einem Multimediabetriebssystem (18) für einen Personalcomputer (17) ablaufen.

7. Verfahren nach einem der Ansprüche 1 bis 6, **dadurch gekennzeichnet,**
**dass** das SPS-Computerprogramm (6) und das Zellkontroll-Computerprogramm (8) durch jeweils unterschiedliche Prozesse ausgeführt werden.

8. Verfahren nach einem der Ansprüche 1 bis 7, **dadurch gekennzeichnet,**
**dass** ein NC-Untercomputerprogramm des Zellkontroll-Computerprogramms (8) zum Bereitstellen der NC-Steuerung (10) in einem NC-Prozess ausgeführt wird und dass ein Manipulator-Unterprogramm des Zellkontroll-Computerprogramms (8) zur Ansteuerung des Manipulators (2a, b) in einem Manipulator-Prozess ausgeführt wird.

9. Verfahren nach Anspruch 8, **dadurch gekennzeichnet,**
**dass** die Rechnervorrichtung (5) mehrere Interprozesskanäle zur Kommunikation mit dem SPS-Computerprogramm (6) mit zumindest teilweise unterschiedlicher Priorisierung bereitstellt, vorzugsweise, dass das NC-Untercomputerprogramm und ein in einem Visualisierungsprozess ausgeführtes Visualisierungsprogramm jeweils über einen Interprozesskanal mit dem SPS-Computerprogramm (6) kommunizieren und der Interprozesskanal des NC-Untercomputerprogramms höher priorisiert ist als detjenige des Visualisierungsprogramms.

10. Verfahren nach Anspruch 4 und einem der Ansprüche 5 bis 9 wenn rückbezogen auf Anspruch 4, **dadurch gekennzeichnet, dass** der NC-Verarbeiter (19) zum Übersetzen des NC-Programms (20) in Sensorabfragen zum Auslesen der Sensorvorrichtung (15 a, b) vorgesehen ist.

11. Verfahren nach Anspruch 10, **dadurch gekennzeichnet, dass** der NC-Verarbeiter eine Berechnungsroutine (25) zur Bahnplanung des Manipulators (2a, b), vorzugsweise umfassend eine Kinematiktransformation und/oder eine Interpolation, basierend auf den Geometriedaten (22a) und/oder den Technologiedaten (22b) ausführt.

12. Verfahren nach Anspruch 10 oder 11, **dadurch gekennzeichnet, dass** der NC-Verarbeiter (19) die Schaltbefehle (21) ausführt, indem das Zellkontroll-Computerprogramm (8) auf die SPS-Schnittstelle (9) des SPS-Computerprogramms (6) zugreift und das SPS-Computerprogramm (6) auf den Zugriff das Ein-Ausgabe-Modul (3a, b) über den Modulbus (7) ansteuert.

13. Verfahren nach Anspruch 11 und Anspruch 12, wenn rückbezogen auf Anspruch 11, **dadurch gekennzeichnet, dass** der NC-Verarbeiter (19) zur Ansteuerung des Manipulators (2a, b), vorzugsweise auch zum Auslesen der Sensorvorrichtung (15a, b), insbesondere auch zum Ausführen der Berechnungsroutine (25), auf eine Kapselungs-Schnittstelle (26) des Zellkontroll-Computerprogramms (8) zugreift und dass auf den Zugriff der Manipulator (2a, b) über den Netzwerkbus (11) angesteuert, vorzugsweise, ggf. auch die Sensorvorrichtung (15a, b) über den Netzwerkbus (11) ausgelesen wird, insbesondere ggf. auch eine Bahnplanung durchgeführt wird.

14. Verfahren nach Anspruch 13, **dadurch gekennzeichnet, dass** der Zugriff auf die Kapselungs-Schnittstelle (26) und/oder auf die SPS-Schnittstelle (9) den Zugriff auf eine objektorientierte Schnittstellen-Klasse (27) von der Art einer Manipulatorklasse (27a), einer Ein-Ausgabe-Modulklasse (27b), einer Sensorklasse (27c) und/oder einer Bahnplanungsklasse (27d) umfasst.

15. Verfahren nach Anspruch 14, **dadurch gekennzeichnet, dass** die Manipulatorklasse (27a), die Ein-Ausgabe-Modulklasse (27b) und/oder die Sensorklasse (27c) jeweils durch ein Manipulatorobjekt (28a), ein Ein-Ausgabe-Modulobjekt (28b) bzw. ein Sensorobjekt (28c) implementiert wird, welches abhängig vom Typ des Manipulators (2a,b), des Ein-Ausgabe-Moduls (3a, b) bzw. der Sensorvorrichtung (15a, b) ist.

## Claims

1. Method for operating an automation arrangement (1), preferably for operating an automation cell (1a), having a manipulator (2a, b) and an input/output module (3a, b) for automated production and also a computer apparatus (5), wherein the computer apparatus (5) is used to execute a PLC computer program (6) for providing a programmable logic controller for the input/output module (3a, b), which PLC computer program (6) is communicatively connected to the input/output module (3a, b) via a module bus (7) for the purpose of actuating said input/output module, wherein the computer apparatus (5) is used to execute a cell control computer program (8) for actuating the PLC computer program (6) via a PLC interface (9) of the PLC computer program (6), wherein the cell control computer program (8) provides an NC controller (10) for the manipulator (2a, b), wherein the cell control computer program (8) is communicatively connected to the manipulator (2a, b) via a network bus (11) for the purpose of actuating said manipulator, **characterized in that** the cell control computer program (8) has an NC processor (19) for translating an NC program (20) into switching commands (21) for actuating the input/output module (3a, b) and for translating an NC program (20) into geometry data (22a) and/or technology data (22b) for actuating the manipulator (2a, b).

2. Method according to Claim 1, **characterized in that** the input/output module (3a, b) has an application apparatus (12), preferably a tool, a measuring apparatus or a receptacle, that is arranged on the manipulator (2a, b).

3. Method according to Claim 1 or 2, **characterized in that** the module bus is a field bus (13) and/or **in that** the network bus (11) is an Ethernet bus (14), particularly a realtime Ethernet bus (14a).

4. Method according to one of Claims 1 to 3, **characterized in that** the cell control computer program (8) is communicatively connected to a sensor apparatus (15a, b) via the network bus (11) for the purpose of reading the sensor apparatus (15a, b).

5. Method according to one of Claims 1 to 4, **characterized in that** the cell control computer program (8) provides a cell control interface via a factory bus (16), to which factory bus (16) the cell control computer program (8) is communicatively connected.

6. Method according to one of Claims 1 to 5, **characterized in that** the computer apparatus (5) is a personal computer (17), preferably **in that** the PLC computer program (6) and the cell control computer program (8) run on a multimedia operating system (18) for a personal computer (17).

7. Method according to one of Claims 1 to 6, **characterized in that** the PLC computer program (6) and the cell control computer program (8) are each executed by different processes.

8. Method according to one of Claims 1 to 7, **characterized in that** an NC computer subroutine of the cell control computer program (8) for providing the NC controller (10) is executed in an NC process and **in that** a manipulator subroutine of the cell control computer program (8) for actuating the manipulator (2a, b) is executed in a manipulator process.

9. Method according to Claim 8, **characterized in that** the computer apparatus (5) provides multiple interprocess channels for communication with the PLC computer program (6) with at least partly different prioritization, preferably **in that** the NC computer subroutine and a visualization program executed in a visualization process each use an interprocess channel to communicate with the PLC computer program (6) and the interprocess channel of the NC computer subroutine has higher priority than that of the visualization program.

10. Method according to Claim 4 and one of Claims 5 to 9, in so far as they refer back to Claim 4, **characterized in that** the NC processor (19) is provided for translating the NC program (20) into sensor queries for reading the sensor apparatus (15a, b).

11. Method according to Claim 10, **characterized in that** the NC processor executes a computation routine (25) for trajectory planning for the manipulator (2a, b), preferably comprising a kinematic transformation and/or an interpolation, based on the geometry data (22a) and/or the technology data (22b).

12. Method according to Claim 10 or 11, **characterized in that** the NC processor (19) executes the switching commands (21) by virtue of the cell control computer program (8) accessing the PLC interface (9) of the PLC computer program (6), and the PLC computer program (6) responding to the access by actuating the input/output module (3a, b) via the module bus (7).

13. Method according to Claim 11 and Claim 12, in so far as it refers back to Claim 11, **characterized in that** the NC processor (19) actuates the manipulator (2a, b), preferably also reads the sensor apparatus (15a, b), particularly also executes the computation routine (25), by accessing an encapsulation interface (26) of the cell control computer program (8) and **in that**, in response to the access, the manipulator (2a, b) is actuated via the network bus (11), preferably, if need be, the sensor apparatus (15a, b) is also read via the network bus (11), particularly, if need be, trajectory planning is also performed.

14. Method according to Claim 13, **characterized in that** the access to the encapsulation interface (26) and/or to the PLC interface (9) comprises the access to an object-oriented interface class (27) having the nature of a manipulator class (27a), of an input/output module class (27b), of a sensor class (27c) and/or of a trajectory planning class (27d).

15. Method according to Claim 14, **characterized in that** the manipulator class (27a), the input/output module class (27b) and/or the sensor class (27c) are implemented by a manipulator object (28a), an input/output module object (28b) and a sensor object (28c), respectively, which are dependent on the type of the manipulator (2a, b), of the input/output module (3a, b) and of the sensor apparatus (15a, b), respectively.

## Revendications

1. Procédé d'exploitation d'un système d'automatisation (1), de préférence pour exploiter une cellule d'automatisation (la), comprenant un manipulateur (2a, b) et un module d'entrée/sortie (3a, b) servant à la fabrication automatisée, ainsi qu'un dispositif calculateur (5), dans lequel un logiciel d'automate programmable SPS (6) servant à fournir une commande logique par automate programmable pour le module d'entrée/sortie (3a, b) est exécuté sur le dispositif calculateur (5), le logiciel d'automate programmable SPS (6) étant en communication informatique avec celui-ci pour commander le module d'entrée/sortie (3a, b) par le biais d'un bus de module (7), dans lequel un logiciel de commande de cellule (8) servant à commander le logiciel d'automate programmable SPS (6) par le biais d'une interface SPS (9) du logiciel d'automate programmable SPS (6) est exécuté sur le dispositif calculateur (5), dans lequel le logiciel de commande de cellule (8) fournit une commande numérique NC (10) pour le manipulateur (2a, b), dans lequel le logiciel de commande de cellule (8) communique par une liaison informatique, par le biais d'un bus de réseau (11), avec le manipulateur (2a, b) afin de commander ce dernier,
**caractérisé en ce que** le logiciel de commande de cellule (8) comporte un processeur NC (19) servant à traduire un programme NC (20) en ordres de commutation (21) afin de commander le module d'entrée/sortie (3a, b) et à traduire un programme NC (20) en données de géométrie (22a) et/ou en données technologiques (22b) afin de commander le manipulateur (2a, b).

2. Procédé selon la revendication 1, **caractérisé en ce que** le module d'entrée/sortie (3a, b) comporte un dispositif d'application (12), de préférence un outil, un dispositif de mesure ou un logement, disposé sur le manipulateur (2a, b).

3. Procédé selon la revendication 1 ou 2,
**caractérisé en ce que** le bus de module est un bus de terrain (13) et/ou **en ce que** le bus de réseau (11) est un bus Ethernet (14), en particulier un bus Ethernet temps réel (14a).

4. Procédé selon l'une des revendications 1 à 3,
**caractérisé en ce que** le logiciel de commande de cellule (8) communique par le biais du bus réseau (11) avec un dispositif capteur (15a, b) afin de lire le dispositif capteur (15a, b).

5. Procédé selon l'une des revendications 1 à 4,
**caractérisé en ce que** le logiciel de commande de cellule (8) fournit une interface de commande de cellule par le biais d'un bus d'usine (16), bus d'usine (16) avec lequel le logiciel de commande de cellule (8) communique par une liaison informatique.

6. Procédé selon l'une des revendications 1 à 5,
**caractérisé en ce que** le dispositif calculateur (5) est un ordinateur personnel (17), de préférence **en ce que** le logiciel d'automate programmable SPS (6) et le logiciel de commande de cellule (8) s'exécutent sur un système d'exploitation multimédia (18) pour ordinateur personnel (17).

7. Procédé selon l'une des revendications 1 à 6,
**caractérisé en ce que** le logiciel d'automate programmable SPS (6) et le logiciel de commande de cellule (8) sont respectivement exécutés par des processus différents.

8. Procédé selon l'une des revendications 1 à 7,
**caractérisé en ce qu'**un sous-programme de commande numérique NC du logiciel de commande de cellule (8) servant à fournir la commande numérique (10) est exécuté dans un processus NC et **en ce qu'**un sous-programme de manipulateur du logiciel de commande de cellule (8) servant à commander le manipulateur (2a,b) est exécuté dans un processus de manipulateur.

9. Procédé selon la revendication 8,
**caractérisé en ce que** le dispositif calculateur (5) fournit une pluralité de canaux interprocessus pour la communication avec le logiciel d'automate programmable SPS (6) avec des priorités au moins partiellement différentes, **en ce que** le sous- programme NC et un programme de visualisation exécuté dans un processus de visualisation communiquent de préférence respectivement avec le logiciel d'automate programmable SPS (6) par le biais d'un canal interprocessus et **en ce que** le canal interprocessus du sous-programme NC présente une priorité supérieure à celle du programme de visualisation.

10. Procédé selon la revendication 4 et l'une des revendications 5 à 9 lorsqu'elles font référence à la revendication 4, **caractérisé en ce que** le processeur NC (19) est prévu pour traduire le programme NC (20) en requêtes de capteur servant à la lecture du dispositif capteur (15a,b).

11. Procédé selon la revendication 10, **caractérisé en ce que** le processeur NC exécute une routine de calcul (25) servant à la planification de trajectoire du manipulateur (2a, b), comprenant de préférence une transformation cinématique et/ou une interpolation, sur la base des données géométriques (22a) et/ou des données techniques (22b).

12. Procédé selon la revendication 10 ou 11,
**caractérisé en ce que** le processeur NC (19) exécute les ordres de commutation (21), en faisant en sorte que le logiciel de commande de cellule (8) accède à l'interface SPS (9) du logiciel d'automate programmable SPS (6) et que le logiciel d'automate programmable SPS (6) commande le module d'entrée/sortie (3a,b) lors dudit accès, par le biais du bus de module (7).

13. Procédé selon la revendication 11 et la revendication 12, lorsqu'elles font référence à la revendication 11, **caractérisé en ce que** le processeur NC (19) accède à une interface d'encapsulation (26) du logiciel de commande de cellule (8) pour la commande du manipulateur (2a,b), de préférence également pour la lecture du dispositif capteur (15a, b), notamment également pour exécuter la routine de calcul (25),
et **en ce que**, lors de l'accès, le manipulateur (2a, b) est commandé par le biais du bus de réseau (11), le dispositif capteur (15a, b) est également de préférence si nécessaire lu par le biais du bus de réseau (11), et une planification de trajectoire est également effectuée si nécessaire.

14. Procédé selon la revendication 13, **caractérisé en ce que** l'accès à l'interface d'encapsulation (26) et/ou à l'interface SPS (9) comprend l'accès à une classe d'interfaces orientée objet (27) du type d'une classe de manipulateur (27a), d'une classe de module d'entrée/sortie (27b), d'une classe de capteur (27c) et/ou d'une classe de planification de trajectoire (27d) .

15. Procédé selon la revendication 14, **caractérisé en ce que** la classe de manipulateur (27a), la classe de module d'entrée/sortie (27b) et/ou la classe de capteur (27c) sont respectivement mises en œuvre par un objet manipulateur (28a), par un objet module d'entrée-sortie (28b) ou par un objet capteur (28c) qui est fonction du type du manipulateur (2a,b), du module d'entrée/sortie (3a, b) ou du dispositif capteur (15a, b).
